# EUROPEAN PATENT SPECIFICATION

(11) **EP 4 394 653 B1**
(45) Date of publication and mention of the grant of the patent: **15.07.2026**
(21) Application number: 23213108.6
(22) Date of filing: 29.11.2023
(51) Int. Cl.: G06K 7/10, G06K 7/14

(54) **METHODS AND SYSTEMS FOR OPERATING OBJECT DETECTION-BASED INDICIA SCANNER**
VERFAHREN UND SYSTEME ZUM BETRIEB EINES AUF OBJEKTERKENNUNG BASIERENDEN INDIZIENSCANNERS
PROCÉDÉS ET SYSTÈMES POUR FAIRE FONCTIONNER UN LECTEUR D'INDICES BASÉ SUR LA DÉTECTION D'OBJETS

(30) Priority: 26.12.2022 CN 202211672616
(43) Date of publication of application: 03.07.2024
(73) Proprietor: Hand Held Products, Inc., Charlotte, NC 28202 (US)
(72) Inventor: NI, Feng, Charlotte, 28202 (US); JI, Zhiwen, Charlotte, 28202 (US); NEWMAN, Theodore, Charlotte, 28202 (US); LI, Jian, Charlotte, 28202 (US); YE, Zhiting, Charlotte, 28202 (US); LENOBLE, Barry, Charlotte, 28202 (US)
(74) Representative: Haseltine Lake Kempner LLP

(56) References cited:
- EP-A2- 0 910 033
- US-A- 5 949 052
- US-B1- 11 265 455

## Description

### FIELD OF THE INVENTION

Various embodiments described herein relate generally to indicia scanners, and more specifically, to methods and systems for operating indicial scanners with an illumination system.

### BACKGROUND

Generally, an indicia scanner (e.g., a barcode scanner, barcode reader, RFID reader) can read data, encoded in the form of an indicia (e.g., barcode). To read the data, an example indicia scanner can illuminate the print or other media embodying the indicia, capture an image of the indicia (e.g., barcode), and analyze the image to decode the data from the indicia.

Applicant has identified several technical challenges associated with indicia scanner devices employing an illumination system, including, but not limited to, erroneous indicia reading, increased power consumption, and adverse effect on the health of human eyes. Through applied effort, ingenuity, and innovation, many of these identified challenges have been overcome by developing solutions that are included in embodiments of the present disclosure, many examples of which are described in detail herein.

EP0910033A2 relates to a system for sensing the presence of an object in the field of view of an imaging assembly of a stationary position optical reader. The system includes a light source disposed in a field of view of the imaging assembly, which is configured to emit light in the direction of the imaging assembly according to a predetermined light pattern. A determination as to whether an object is present in a presentation area of the reader system is made by detecting for the presence of the light pattern in image information generated by the imaging assembly.

US5949052A relates to a system for sensing the presence of an object in the field of view of an imaging assembly of a stationary position optical reader. The system includes a specialized symbol disposed in a stationary position in relation to the imaging assembly of a specially configured optical reader. An optical reader is configured to determine whether an object is in the field of view of the imaging assembly and determining whether features of the specialized symbol are present in the image information.

### BRIEF SUMMARY

Various embodiments described herein relate to apparatuses, methods, and systems for operating an indicia scanner. The present invention is defined in the independent claims, to which reference should now be made. Advantageous features are set out in the sub claims. Various embodiments are directed to a computer-implemented method comprising: detecting, by a controller, an object within a field of view of an object detection assembly of an indicia scanner; starting, by the controller, a scanning operation responsive to the detected object, wherein starting the scanning operation comprises energizing an illumination source of the indicia scanner; determining, by the controller, whether the object is within a region of interest within the field of view of an image capturing assembly of the indicia scanner; continuing, by the controller, the scanning operation responsive to determining that the object is within the region of interest; and stopping, by the controller, the scanning operation upon decoding of an indicia embodied by the object, wherein stopping the scanning operation comprises de-energizing the illumination source.

In various embodiments, the computer-implemented method may further comprise determining, by the controller, the region of interest within the field of view.

In various embodiments, the controller may be configured to stop the scanning operation responsive to determining that the object is not within the region of interest.

In various embodiments, the computer-implemented method may further comprise responsive to determining that the object is within the region of interest, determining, by the controller, whether the indicia has been decoded.

In various embodiments, decoding of the indicia may comprise retrieving data encoded in the indicia on a captured image of the object.

In various embodiments, continuing the scanning operation may comprise capturing, by the image capturing assembly, an image of the region of interest within the field of view.

In various embodiments, continuing the scanning operation may further comprise attempting to decode the indicia.

In various embodiments, the computer-implemented method may further comprise determining whether the indicia has been decoded; and de-energizing the illumination source in response to determining that the indicia has been decoded.

In various embodiments, the computer-implemented method may further comprise enabling, by the controller, the object detection assembly.

Various embodiments are directed to an apparatus comprising: an object detection assembly of an indicia scanner configured to detect presence of an object within a field of view of the indicia scanner; a controller communicatively coupled to the object detection assembly, wherein the controller is configured to: start a scanning operation responsive to the detected object, wherein starting the scanning operation comprises energizing an illumination source of the indicia scanner; determine whether the object is within a region of interest within the field of view of an image capturing assembly of the indicia scanner; continue the scanning operation responsive to determining that the object is within the region of interest; and stop the scanning operation upon decoding of an indicia embodied by the object, wherein stopping the scanning operation comprises de-energizing the illumination source.

In various embodiments, the controller may be further configured to determine the region of interest within the field of view.

In various embodiments, the controller may be further configured to stop the scanning operation responsive to determining that the object is not within the region of interest.

In various embodiments, the controller may be further configured to determine whether the indicia has been decoded responsive to determining that the object is within the region of interest.

In various embodiments, decoding of the indicia may comprise retrieving data encoded in the indicia on a captured image of the object.

In various embodiments, continuing the scanning operation may comprise capturing, by the image capturing assembly, an image of the region of interest within the field of view.

### BRIEF DESCRIPTION OF THE DRAWINGS

Reference will now be made to the accompanying drawings, which are not necessarily drawn to scale, and wherein:
FIGS. 1 and 2 illustrate an exemplary apparatus of an indicia scanner in accordance with one or more embodiments of the present disclosure;
FIG. 3 illustrates a block diagram of an example control system in accordance with one or more embodiments of the present disclosure; and
FIG. 4 illustrates a flowchart of an example method of operating an indicia scanner in accordance with one or more embodiments of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout. Terminology used in this patent is not meant to be limiting insofar as devices described herein, or portions thereof, may be attached or utilized in other orientations.

It should be understood at the outset that although illustrative implementations of one or more aspects are illustrated below, the disclosed systems, and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements are disclosed, the drawings may not be to scale.

Unless the context requires otherwise, throughout the specification and claims which follow, the word "comprise" and variations thereof, such as, "comprises" and "comprising" are to be construed in an open sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, one or more particular features, structures, or characteristics from one or more embodiments may be combined in any suitable manner in one or more other embodiments.

The words "example," or "exemplary," when used herein, are intended to mean "serving as an example, instance, or illustration." Any implementation described herein as an "example" or "exemplary embodiment" is not necessarily preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such component or feature may be optionally included in some embodiments, or it may be excluded.

The term "indicia", as used in some examples herein, is intended to include any machine-readable indicia, including barcodes, QR codes, matrix codes, 1D barcodes, 2D barcodes, IR tags, photographs, UPC code, and characters that are readable by a computing device (for example, an indicia scanner). Indicia are typically graphical representations of information (e.g., data), such as product numbers, package tracking numbers, patient identification numbers, medication tracking identifiers, personnel identification numbers, and/or the like. Other indica include RFID tags, and near-field-communication (NFC) tags.

Embodiments of the present disclosure recognize that maintaining the illumination source of an indicia scanner in a continuous state, active state, energized state, and/or similar words used herein interchangeably when an object is not present in the field of view of the indicia scanner can affect the efficiency and accuracy of the indicia scanner. This, for example, can affect productivity and interrupt workflow processes in various embodiments (e.g., work environment, shopping environment, and/or the like).

Example embodiments described herein provide methods, apparatuses, and systems that facilitate scanning operation of an indicia scanner based at least in part on detecting the presence of an object within a region of interest and stopping the scanning operation of the indicia scanner based at least in part on absence of an object within the region of interest. For instance, exemplary embodiments described herein provide an indicia scanner employing automated illumination control, wherein the illumination source of the indicia scanner may be energized responsive to an object positioned within a region of interest and wherein the illumination source of the indicia scanner may be de-energized responsive to removal of an object within the region of interest.

In some embodiments, an exemplary indicia scanner may be configured to receive a signal (e.g., input) to begin a scanning operation. Responsive to the signal, the indicia scanner may look/search within the field of view of the indicia scanner to determine if an object is within the field of view. If the indicia scanner detects/determines that an object is within the field of view, the indicia scanner may start the scanning operation, where starting the scanning operation may include energizing an illumination source (e.g., one or more LED lights, and/or the like) configured to illuminate objects within the field of view of the indicia scanner. The indicia scanner may then determine (e.g., calculate) a region of interest in its field of view. In some embodiments, determining (e.g., calculating) the region of interest comprises determining (e.g., calculating) the distance between the detected object and the indicia scanner. In some embodiments, the indicia scanner may determine (e.g., calculate) a region of interest in its field of view in order to subsequently determine if an object is within the region of interest (e.g., within the region of interest within the field of view). The indicia scanner, for example, may look for the new object (e.g., substantially only) in the determined region of interest. In some embodiments, if the indicia scanner determines that a new object is not within the region of interest, the indicia scanner stops the scanning operation, where stopping the scanning operation may include turning off (e.g., de-energizing) the illumination source. In some embodiments, if the indicia scanner determines that a new object is within the region of interest, the indicia scanner continues the scanning operation, wherein continuing the scanning operation may include keeping the illumination source on (e.g., energized). The indicia scanner may stop the scanning operation if the indicia is successfully decoded by the indicia scanner.

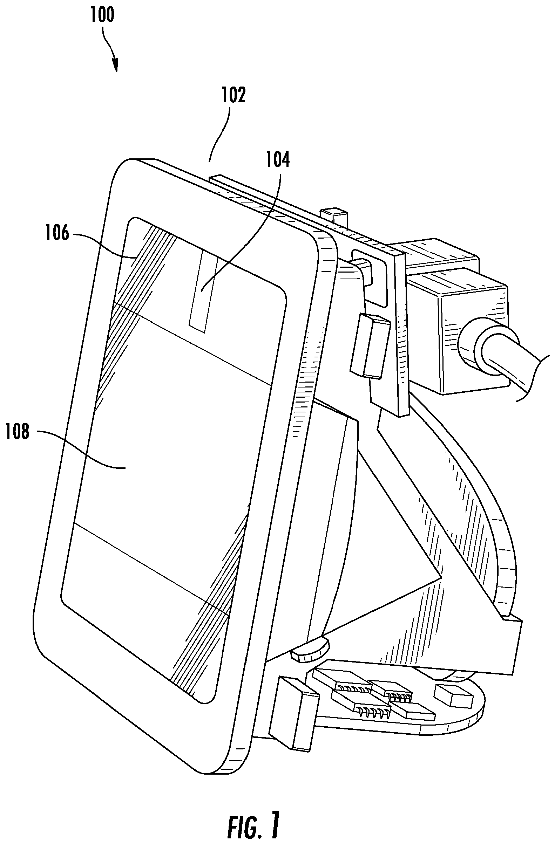

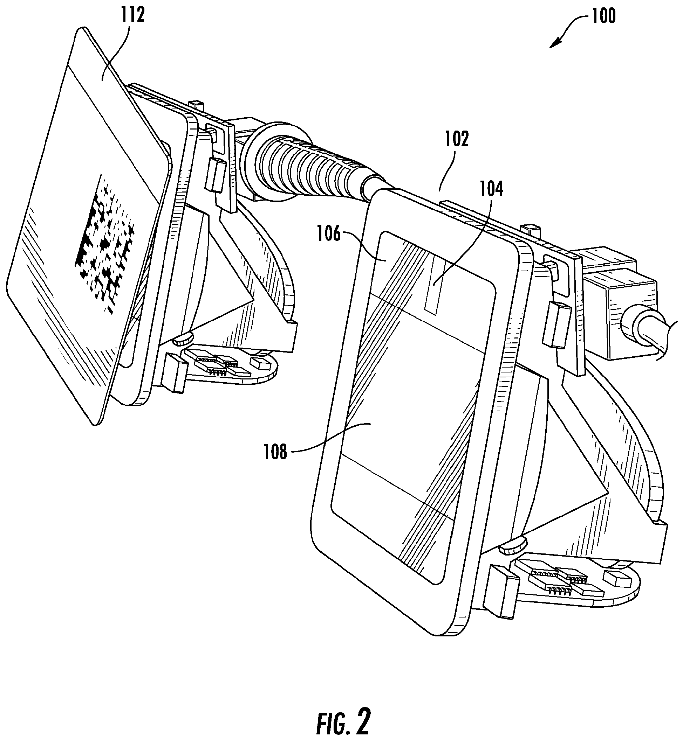

FIGS. 1 and 2 illustrate an exemplary indicia scanner 100 according to one or more embodiments described herein. The indicia scanner 100 includes an object detection assembly 104, an illumination assembly 106, an image capturing assembly 108, and a control system 110. In example embodiments, a user may operate the indicia scanner 100 to capture an image of an object(s) (e.g., object 112).

In an example, the user may correspond to a customer at a retail store. As another example, the user may correspond to a cashier at a retail store. As yet another example, the user may correspond to an operator working in a work area. For example, the work area may include worksites where one or more predetermined operations may be performed by one or more machines and one or more users. Some examples of the work area may include, but are not limited to, an assembly line, a warehouse, and a retail store. Further, some examples of the predetermined operation performed by the one or more users may include using the indicia scanner 100 to capture an image of an object 112. In some embodiments, to capture the image of an object 112, the user may provide an input on the indicia scanner 100. For example, the input may correspond to pushing a trigger button on the indicia scanner 100, providing a voice input to the indicia scanner 100, one or more gestures, and/or the like. It should be understood that a user as used herein is not limited to a customer at a retail store, a cashier at a retail store, or an operator working in a work area.

In an example embodiment, the indicia scanner 100 may correspond to a mobile device, such as a hand-held indicia scanner, a portable data terminal, mobile phone, a tablet, portable computer, and/or the like, or may be a stationary terminal being fixed to a single position (e.g., along an assembly line, at a retail store self-checkout station, and/or like) which is capable of capturing one or more images. In an example embodiment, the indicia scanner 100 includes an object detection assembly 104 that is configured to detect the presence (and/or may conversely detect the absence) of an object within the field of view of the indicia scanner 100.

In an example embodiment, the object detection assembly 104 may be configured to detect the presence of an object 112 within the field of view of the image capturing assembly 108, where the field of view of the indicia scanner 100 may be defined by (e.g., corresponds to) the field of view of the image capturing assembly 108. For example, the object detection assembly 104, when enabled, may function as a proximity sensor that senses when an object is substantially within a certain distance from the indicia scanner 100 and within the field of view of the image capturing assembly 108. In an example embodiment, the object detection assembly 104 may be configured to search (e.g., look) within the field of view of the image capturing assembly 108 in order to detect if an object is within the field of view. In an example embodiment, the indicia scanner 100 (e.g., image capturing assembly 108 thereof) may include multiple regions of interest within its field of view, where a region of interest may be defined by a distance from the indicia scanner 100. For example, the indicia scanner 100 may include multiple fields of interest that correspond to different ranges (e.g., short range, far range, and/or the like). For example, in some embodiments, the indicia scanner 100 may include a first region of interest that corresponds to a short range and may include a second region of interest that corresponds to a long range, wherein the indicia scanner 100 may be capable of reading indicia in a near range, as well as capable of reading indicia in a far range. In an example embodiment, the detection distance (e.g., short range, far range, and/or the like) of the object detection assembly 104 may be varied, changed, adjusted, and/or other similar words used herein interchangeably, based at least in part on one or more input signals. In an example embodiment, changing the detection distance may comprise changing, adjusting, and/or other similar words used herein interchangeably, energy values associated with the object detection assembly 104.

In an example embodiment, the control system 110 is communicatively coupled with the object detection assembly 104, the illumination assembly 106, and/or the image capturing assembly 108. In an example embodiment, the control system 110 may be configured to determine (e.g., calculate) a region of interest (e.g., short range, long range, and/or the like) in response to detection (e.g., by the object detection assembly 104) of an object within the field of view of the image capturing assembly 108. In some embodiments, determining (e.g., calculating) the region of interest comprises determining (e.g., calculating) the distance between the detected object and the indicia scanner. In an example embodiment, prior to determining the region of interest, the control system 110 may cause a scanning operation to begin. In some embodiments, the indicia scanner (e.g., via the control system 110) may determine (e.g., calculate) the region of interest based at least in part on the detected object (e.g., distance between the object and the indicia scanner 100), based at least in part on user input, and/or based at least in part on determining a current operating mode of the indicia scanner 100.

In an example embodiment, the object detection assembly 104 includes an electromagnetic radiation source (e.g., a light source, such as an infrared light source). The electromagnetic radiation source can emit electromagnetic radiation (e.g., light) toward an object 112 within the field of view of the image capturing assembly 108. In some embodiments, for example, the object detection assembly 104 may be embodied as, or otherwise comprise, an infrared sensor that may be communicably coupled to the control system 110 (e.g., via a bus, such as an I2C bus). The infrared sensor, for example, can emit electromagnetic radiation (e.g., infrared light) toward an object 112 within the field of view of the image capturing assembly 108. In example embodiments, the infrared sensor may be configured to project (e.g., emit) infrared light on an object 112 within the field of view of the indicia scanner 100 and may also be configured to receive infrared light reflected off of an object 112 (which may or may not bear an indicia) in order to determine the presence of an object 112 within the field of view of the image capturing assembly 108. The infrared sensor can convert the reflected signals of electromagnetic radiation (e.g., optical signals) into electrical signals that can be processed by the indicia scanner 100 (e.g., processed by the control system 110 of the indicia scanner 100).

For example, in an example embodiment, the object detection assembly 104 may comprise an infra-red (IR)-based object presence and range detector for generating an IR-based object detection field within the field of view of the image capturing assembly 108, detecting the presence of an object within the region of interest (e.g., determined regions of the object detection field), and generating control activation signals which are supplied/transmitted to the control system 110 for indicating when and/or where an object is detected within the object detection field.

In an example embodiment, the illumination assembly 106 may be configured to illuminate a field of view of the image capturing assembly 108. The illumination assembly 106 may, for example, include an illumination source, an illuminating optics assembly, such as one or more lenses, diffusers, wedges, reflectors or a combination of such elements, for directing light from illumination source in the direction of the field of view. For example, if the image of an object 112 is to be captured, the illumination assembly 106 may be configured to direct the light on the object 112. Some examples of the illumination source may include, for example, laser or light emitting diodes (LEDs) such as white LEDs or red LEDs. In example embodiments, the illumination assembly 106 may be configured to generate and project light beam (e.g., visible light beam) towards the field of view of the image capturing assembly 108, whereby the light beam may be projected on an object within a region of interest of the field of view of the image capturing assembly 108. In an example embodiment, the illumination assembly may generate and project light beam on the object within a region of interest of the field of view of the image capturing assembly 108 in response to automatic detection (e.g., by the object detection assembly 104) of an object 112 within the region of interest within the field of view of the image capturing assembly 108. In an example embodiment, illuminating the field of interest (e.g., directing light towards the field of interest) may comprise receiving by a driver (e.g., LED driver) communicably coupled to the illumination assembly 106, signal(s) (e.g., pulse width modulation (PWM) signal(s)) to generate current of varying levels (e.g., low current, medium current, high current, and/or the like). In an example embodiment, the noted signal(s) may be generated by the control system 110 (e.g., controller thereof).

In an example embodiment, based at least in part on the detection of an object 112 within the region of interest within the field of view of the indicia scanner 100, the control system 110 may be configured to instruct the image capturing assembly 108 to capture an image such that the image captured includes the indicia on the object 112 within the region of interest within the field of view of the indicia scanner 100. In an example embodiment, the control system 110 may instruct the image capturing assembly 108 to focus on a particular region of interest (e.g., determined by the object detection assembly 104). Further, in some example embodiments, prior to capturing the image, the control system 110 may determine whether the object is within the region of interest, and may then instruct the image capturing assembly 108 to capture the image. In an example embodiment, if the control system 110 (e.g., based at least in part on signal/data received from the object detection assembly 104) determines that there is no object within the region of interest, the control system 110 may stop the scanning operation. As noted above, in some embodiments, stopping the scanning operation comprises de-energizing the illumination source of the illumination assembly 106. That is, in some embodiments, responsive to the object detection assembly 104 determining that there is no object within the region of interest, the control system 110 may instruct (e.g., transmit a signal to) the illumination assembly 106 to de-energize the illumination source.

In an example embodiment, the image capturing assembly 108 may include a receiving sensor (e.g., image sensor) for receiving reflected signals of electromagnetic radiation. The receiving sensor can convert the reflected signals of electromagnetic radiation (e.g., optical signals) reflected from an indicia into electrical signals that can then be processed by the indicia scanner 100 (e.g., via the control system 110) to decode the indicia. In an example embodiment, the receiving sensor can serve the dual purpose of receiving electromagnetic radiation reflected from an indicia for purposes of decoding the indicia, and of receiving electromagnetic radiation reflected off of an object 112 (which may bear an indicia) to determine the presence of an object 112 within the field of view of the image capturing assembly 108. That is, in some embodiments, the receiving sensor may be involved in both the detection of objects 112 and the acquisition of indicia information.

In some embodiments, the image capturing assembly 108 may be embodied as a laser scanning subsystem. In some embodiments, the indicia capturing assembly may be embodied as an imaging subsystem. Where the image capturing assembly 108 is embodied as a laser-scanning subsystem, the receiving sensor can be, for example, a photodiode. Where the image capturing assembly 108 is embodied as an imaging subsystem, the receiving sensor can be, for example, an image sensor/camera sensor (e.g., charged-couple device (CCD) sensor, complementary metal-oxide-semiconductor (CMOS) sensor, a color or monochrome 1D or 2D CCD, CMOS, NMOS, PMOS, CID or CMD solid state image sensor).

Further, where the image capturing assembly 108 is embodied as an imaging subsystem, in some embodiments, the image capturing assembly 108 may include an imaging optics component for receiving and focusing an incident light on the image sensor. In an example embodiment, the imaging optics assembly may include an autofocus lens assembly that may include one or more lens elements, such as fluid elements, electro-wetting fluid elements, and/or non-deformable solid elements, such as glass, polycarbonate, or other materials known to those of ordinary skill in the art. Each of these lens elements can be dimensioned, spaced, positioned, and generally constructed to adjust a focal point of incident light onto the image sensor.

In an example embodiment, the indicia scanner 100 can include two operational modes. In a scanning mode, the indicia scanner 100 may be configured to actively attempt to acquire indicia information for purposes of decoding an indicia (e.g., code symbol) that may be within the field of view of the image capturing assembly 108. In many instances it may not be desirable for the indicia scanner 100 to continuously attempt to acquire indicia information (e.g., as this may increase the likelihood of erroneous indicia readings, adverse effect on the health of the human eye, inefficient power consumption, and/or the like). An exemplary indicia scanner, for example, may operate on battery power that would be more rapidly depleted by the additional power consumption associated with continuous attempts to acquire indicia information. In standby mode, the indicia scanner 100 may be configured to delay its attempts to acquire indicia information until the occurrence of a triggering event.

In an example embodiment, the event that triggers the attempt to acquire indicia information in the indicia scanner 100 according to the present disclosure may be the detection of an object 112 in the field of view of the image capturing assembly 108. The object detection assembly 104 (which in some embodiments may be embodied and/or comprise an infrared sensor) can emit a beam of electromagnetic radiation from the electromagnetic radiation source into the field of view of the image capturing assembly 108. In an example embodiment, the type of electromagnetic radiation that is emitted may be any type that is suitable for proximity detection, including infrared electromagnetic radiation, visible light electromagnetic radiation, and ultraviolet electromagnetic radiation. In an example embodiment, to detect the presence of an object 112 within the field of view of the image capturing assembly 108, the object detection assembly 104 may monitor changes in the reflected signal (e.g., the return signal, reflected optical signal) detected by the object detection assembly (e.g., detected by the infrared sensor thereof). For example, a reflected signal having more power (e.g., more intensity) may indicate the presence of an object 112 within the path of the beam of electromagnetic radiation emitted by the infrared sensor (e.g., based at least in part on more of the electromagnetic radiation being reflected off of the object 112 and back to the infrared sensor than if no object 112 was present).

In an example embodiment, the nominal range of the object detection assembly 104 can be the maximum distance at which it can detect the presence of an object 112. The indicia scanner 100, for example, may trigger scanning mode only when an object 112 is positioned substantially within the maximum distance from the indicia scanner 100. In an example embodiment, the indicia scanner 100 may permit the user to calibrate the object detection assembly 104 and/or select (e.g., specify and/or similar words used herein interchangeably) a detection distance such that the object detection assembly 104 may only detect an object that is substantially at a specified distance from the indicia scanner 100. For example, the indicia scanner 100 may trigger scanning mode only when an object 112 is positioned substantially at the calibrated distance/selected distance from the indicia scanner 100 (e.g., at the calibrated distance/selected distance from the image capturing assembly 108).

In an example embodiment, the control system 110 may include an indicia decoding processing unit. The indicia decoding processing unit can process (e.g., decode, read) indicia information acquired by the image capturing assembly 108. The indicia decoding processing unit may receive the electrical signals (e.g., converted from the optical signals acquired by the receiving sensor (e.g., imaging sensor) of the image capturing assembly 108), and convert the electrical signals to data (e.g., product number, package identification number, and/or the like).

In an example embodiment, as described above, the image capturing assembly 108 may comprise (or otherwise be embodied) as an imaging subsystem. In an example embodiment, when triggered by the object detection assembly, the imaging subsystem can acquire indicia information by gathering/collecting electromagnetic radiation (e.g., visible light) from an object 112 within the field of view of the imaging subsystem. In an example embodiment, the electromagnetic radiation may be gathered/collected through a lens, where it is focused onto an image sensor (e.g., a CCD, CMOS sensor, or any other sensor that may be used in a digital imaging device). For example, the camera component of a smartphone device, or any other type of imager, may serve as the imaging subsystem. The image sensor, for example, can convert the gathered/collected electromagnetic radiation into a digital image depicting a two-dimensional representation of the object 112 within the imaging subsystem's field of view. The digital image may represent the indicia information that is passed on to the indicia decoding processing unit.

As shown in FIGS 1 and 2, in some example embodiments, the indicia scanner 100 includes a housing 102. The housing 102 may enclose other components of the indicia scanner 100. For example, the housing 102 may enclose the control system 110, the object detection assembly 104, the illumination assembly 106, and the image capturing assembly 108 of the indicia scanner 100. Alternatively, or additionally, the indicia scanner 100 may be implemented in a mobile device such as a smartphone, and/or the like.

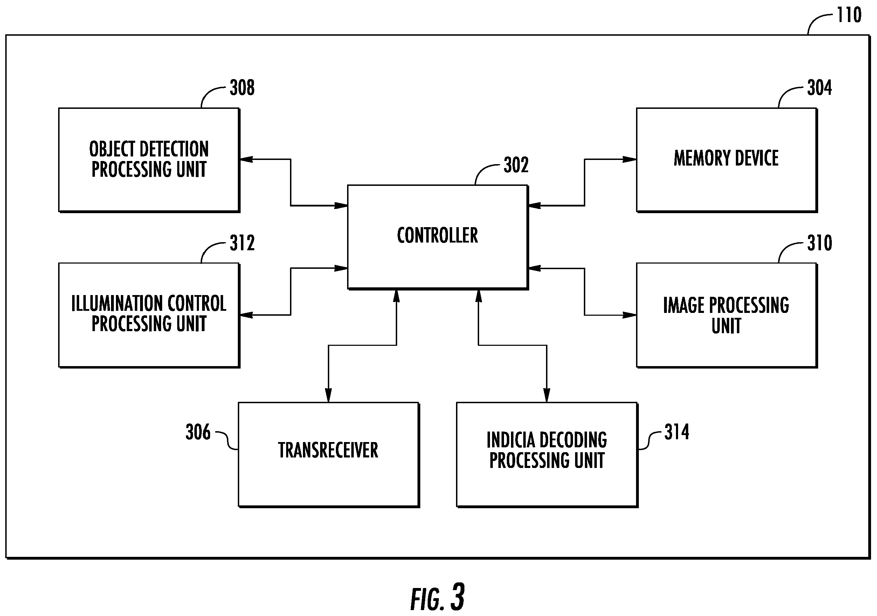

FIG. 3 illustrates a block diagram of the control system 110, in accordance with one or more embodiments. The control system 110 may include a controller 302, a memory device 304, a transceiver 306, an object detection processing unit 308, an image processing unit 310, an illumination control processing unit 312, and an indicia decoding processing unit 314.

The controller 302 may be embodied as one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an application specific integrated circuit (ASIC) or field programmable gate array (FPGA), or some combination thereof.

Accordingly, although illustrated in FIG. 3 as a single controller, in an example embodiment, the controller 302 may include a plurality of processors and signal processing modules. The plurality of processors may be embodied on a single electronic device or may be distributed across a plurality of electronic devices collectively configured to function as the circuitry of the control system 110. The plurality of processors may be in operative communication with each other and may be collectively configured to perform one or more functionalities of the circuitry of the control system 110, as described herein. In an example embodiment, the controller 302 may be configured to execute instructions stored in the memory device 304 or otherwise accessible to the controller 302. These instructions, when executed by the controller 302, may cause the circuitry of the control system 110 to perform one or more of the functionalities, as described herein.

Whether configured by hardware, firmware/software methods, or by a combination thereof, the controller 302 may include an entity capable of performing operations according to embodiments of the present disclosure while configured accordingly. Thus, for example, when the controller 302 is embodied as an ASIC, FPGA, or the like, the controller 302 may include specifically configured hardware for conducting one or more operations described herein. Alternatively, as another example, when the controller 302 is embodied as an executor of instructions, such as may be stored in the memory device 304, the instructions may specifically configure the controller 302 to perform one or more algorithms and operations described herein.

Thus, the controller 302 used herein may refer to a programmable microprocessor, microcomputer or multiple processor chip or chips that can be configured by software instructions (applications) to perform a variety of functions, including the functions of the various embodiments described above. In some devices, multiple processors may be provided dedicated to wireless communication functions and one processor dedicated to running other applications. Software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. The memory can also be located internal to another computing resource (e.g., enabling computer readable instructions to be downloaded over the Internet or another wired or wireless connection).

The memory device 304 may include suitable logic, circuitry, and/or interfaces that are adapted to store a set of instructions that is executable by the controller 302 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory device 304 may be integrated with the controller 302 on a single chip, without departing from the scope of the disclosure.

The transceiver 306 may correspond to a communication interface that may facilitate transmission and reception of messages and data to and from various devices. Examples of the transceiver 306 may include, but are not limited to, an antenna, an Ethernet port, a USB port, a serial port, or any other port that can be adapted to receive and transmit data. The transceiver 306 transmits and receives data and/or messages in accordance with the various communication protocols, such as, Bluetooth^{®}, Infra-Red, I2C, TCP/IP, UDP, and 2G, 3G, or 4G communication protocols.

The object detection processing unit 308 may include suitable logic and circuitry that may enable the control system 110 determine/detect the presence of an object within a field of view of the indicia scanner 100 and/or determine/detect the presence of an object within a region of interest within the field of view of the indicia scanner 100. In an example embodiment, the object detection processing unit 308 may be configured to receive data/signal generated by the object detection assembly 104 and may be configured to process the data/signal in order to the determine/detect the presence of an object within the field of view of the indicia scanner 100.

In example embodiments, based at least in part on data/signal received from the object detection assembly 104 (e.g., IR-based object presence and range/distance detector), the object detection processing unit 308 may be configured to determine the presence of an object within the field of view of the indicia scanner 100. Further, based at least in part on data/signal received from the object detection assembly 104, the object detection processing unit 308 may be configured to determine (e.g., calculate) a region of interest. Further, based at least in part on data/signal received from the object detection assembly 104, the object detection processing unit 308 may be configured to determine if an object is present within a determined region of interest. Further, the object detection processing unit 308 may be configured to store in the memory device 304, data/information relating to the location of a detected object within a field of view of the image capturing assembly 108 of the indicia scanner 100 and/or data/information relating to the location of a detected object within a region of interest within a field of view of the image capturing assembly 108 of the indicia scanner 100.

The illumination control processing unit 312 may include suitable logic and circuitry that may enable the control system 110 to at least control the operation of the illumination assembly 106. In an example embodiment, the illumination control processing unit 312 may be configured to receive a signal (e.g., originating from the object detection assembly 104) to energize the illumination source of the illumination assembly 106, wherein the illumination control processing unit 312 may cause the illumination assembly 106 to energize the illumination source. Further, in an example embodiment, the illumination control processing unit 312 may be configured to receive a signal to de-energize the illumination source of the illumination assembly 106.

The image processing unit 310 may include suitable logic and circuitry that may enable the control system 110 to at least control the operation of the image capturing assembly 108. In an example embodiment, the image processing unit 310 may be configured to receive a signal via a bus such as I2C bus) to initialize the sensor (e.g., image sensor/camera sensor) embodied by the image capturing assembly 108. Further, the image processing unit 310 may be configured to instruct the image capturing assembly 108 to capture an image of the object (which may bear/include an indicia) within the region of interest within the field of view of the indicia scanner 100, wherein the captured image may include an indicia embodied by the object. In an example embodiment, the image processing unit 310 may be further configured to process the captured images (e.g., captured by the image capturing assembly 108). For example, the image processing unit 310 may be configured to read indicia, such as 1D and/or 2D barcodes and retrieve information therein. In an example embodiment, the image processing unit 310 may be configured to retrieve the information from the captured image by applying one or more image processing techniques. In some embodiments, the image processing unit 310 retrieves the information from the indicia by decoding the indicia. For example, in some embodiments, the image processing unit 310 may run an algorithm (e.g., a decoding algorithm) on the captured image. In some embodiments, the captured image of the indicia may be transferred to the indicia decoding processing unit 314 to decode the indicia. For example, in some embodiments, the captured image of the indicia may be transferred to the controller as pixel data, where the pixel data may be digitally processed by the indicia decoding processing unit 314 to decode the indicia.

The indicia decoding processing unit 314 may include suitable logic and circuitry that may enable the control system 110 to at least control the decoding of an indicia on an image captured by the image capturing assembly 108. In an example embodiment, the indicia decoding processing unit 314 can process (e.g., decode, read) indicia information acquired/retrieved by the image capturing assembly 108. The indicia decoding processing unit 314 may receive the electrical signals (e.g., converted from the optical signals acquired by the receiving sensor (e.g., image sensor)), and convert the electrical signals to data (e.g., product number, package identification number, and/or the like). The data/information obtained from the decoding the indicia may be stored in the memory 304.

In an example embodiment, the controller 302 may be configured to control the operation of the various units of the control system 110. A person having ordinary skills in the art would appreciate that the scope of the disclosure is not limited to having separate units in the control system 110. In an example embodiment, each of the memory device 304, the transceiver 306, the object detection processing unit 308, the image processing unit 310, the illumination control processing unit 312, and indicia decoding processing unit 314 may be embedded in the controller 302, itself. In such a scenario, the controller 302 may be configured to perform the operation of each unit in the control system 110.

In some embodiments, the indicia scanner 100 may additionally include an SPI NOR Flash (e.g. serial SPI NOR Flash) (not shown), a Beeper (not shown), and/or a USB port (not shown). The SPI NOR Flash may be configured to store firmware code and/or support SPI bus to communicate between the control system 100 (e.g., controller thereof) and the device. The control system may transmit signal(s), such as PWM signal(s) to a driver communicably coupled to the Beeper in order to drive the beeper to output sound. The USB port may be configured to connect the indicia scanner to a host device (e.g., host machine).

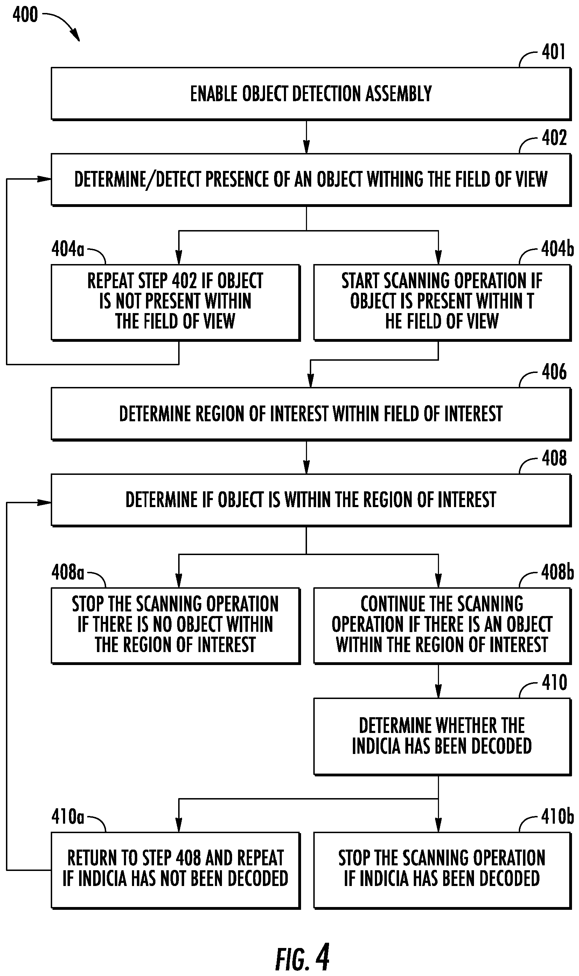

Figure 4 illustrates an example flowchart/method of the operations performed by an apparatus, such as the indicia scanner 100 (having control system 110) in accordance with example embodiments of the present disclosure. It will be understood that each block of the flowchart, and combinations of blocks in the flowchart, may be implemented by various means, such as hardware, firmware, one or more processors, circuitry and/or other devices associated with execution of software including one or more computer program instructions. For example, one or more of the procedures described above may be embodied by computer program instructions. In this regard, the computer program instructions which embody the procedures described above may be stored by a memory of an apparatus employing an embodiment of the present disclosure and executed by a processor in the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowchart's block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowchart's block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart's block(s). As such, the operations of FIG. 4, when executed, convert a computer or processing circuitry into a particular machine configured to perform an example embodiment of the present disclosure. Accordingly, the operations of FIG. 4 define an algorithm for configuring a computer or processor, to perform an example embodiment. In some cases, a general purpose computer may be provided with an instance of the processor which performs the algorithm of FIG. 4 to transform the general purpose computer into a particular machine configured to perform an example embodiment.

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

FIG. 4 illustrates a flowchart 400 of a method which can be performed by an indicia scanner, such as indicia scanner 100. At step/operation 401, the indicia scanner 100 includes means, such as the control system 110, to enable/activate the object detection assembly 104. For example, the control system 110 may cause the object detection assembly 104 to be enabled/activated. In an example embodiment, the control system 110 may cause the object detection assembly 104 to be enabled in response to user input. For example, in some embodiments, a user may be configured to enable the object detection assembly 104. In an example embodiment, to enable the object detection assembly 104, the user may provide an input on the indicia scanner 100. For example, the input may correspond to pushing a trigger button on the indicia scanner 100, providing a voice input to the indicia scanner 100, one or more gestures, and/or the like. The object detection assembly 104 may be enabled responsive to the input.

At step/operation 402, the indicia scanner 100 includes means, such as the control system 110, the object detection assembly 104, and/or the like for determining/detecting the presence of an object within the field of view of the image capturing assembly 108. Determining/detecting the presence of an object within the field of view of the image capturing assembly 108, for example, may include looking/searching for an object within the field of view of the image capturing assembly 108. In an example embodiment, the object detection assembly 104 may be configured to automatically determine/detect the presence of an object by projecting a light beam (e.g., an IR-based light beam) into the field of view and detecting a return signal from an object present in the field of view in order to detect the presence of that object.

At step/operation 404a, if it is determined that an object is not present within the field of view, step/operation 402 may be repeated. In some embodiments, the control system maintains a control loop between step/operations 402 and 404a.

At step/operation 404b, the indicia scanner includes means, such as the control system 110, the object detection assembly l04, the illumination assembly 106 and/or the like for starting the scanning operation. For example, responsive to detecting/determining, by the control system 110 (e.g., in conjunction with the object detection assembly 104), that an object is present within the field of view of the image capturing assembly 108, the control system 110 may cause a scanning operation to start. In an example embodiment, starting a scanning operation may include energizing (e.g., activating) the illumination source of the illumination assembly 106. The illumination source of the illumination assembly 106, for example, may be configured to illuminate an object within the field of view of the image capturing assembly 108 in order to capture an object positioned within the field of view (e.g., within a region of interest).

At step/operation 406, the indicia scanner includes means, such as the control system 110, the object detection assembly 104, and/or the like for determining (e.g., calculating) the region of interest. For example, there may be instances when more than one object and/or more than one indicia (e.g., barcode, QR code, and/or the like) may be present within the field of view of the indicia capturing assembly. As another example, there may be instances when an indicia scanner includes a plurality of regions of interest. In an example embodiment, each of the plurality of regions of interest may correspond to a distance/range relative the indicia scanner and/or the image capturing assembly 108 of the indicia scanner (e.g., far range, near range, and/or the like). In some embodiments, determining (e.g., calculating) the region of interest comprises determining (e.g., calculating) the distance between the detected object and the indicia scanner. Additionally and/or alternatively, in some embodiments, the control system 110 may be configured to determine (e.g., calculate) the region of interest based at least in part on user input. Additionally and/or alternatively, in some embodiments, the control system 110 may be configured to determine the region of interest based at least in part on the current operating mode (e.g., short range mode, long range mode, and/or the like) of the indicia scanner 100.

At step/operation 408, the indicia scanner includes means, such as the control system 110, the object detection assembly 104, and/or the like for determining whether an object (e.g., unscanned object, new object, and/or similar words used herein interchangeably) is within the region of interest within the field of view of the image capturing assembly.

At step/operation 408a, the indicia scanner includes means, such as the control system 110, the object detection assembly 104, and/or the like for stopping the scanning operation in response to determining that there is no object within the region of interest. For example, in response to determining that there is no object within the region of interest, the control system 110 may stop the scanning operation (e.g., started at step/operation 404b). In example embodiments, stopping the scanning operation may include de-energizing (e.g., deactivating) the illumination source of the illumination assembly 106 of the indicia scanner 100.

At step/operation 408b, the indicia scanner includes means, such as the control system 110, the object detection assembly 104, and/or the like for continuing the scanning operation in response to determining that there is an object within the region of interest. For example, in response to determining that there is an object within the region of interest, the control system 110 may continue the scanning operation (e.g., started at step/operation 404b). In an example embodiment, continuing the scanning operation comprises capturing, by the image capturing assembly 108, an image of the region of interest within the field of view of the image capturing assembly 108. Further, in example embodiments, continuing the scanning operation comprises attempting to decode the indicia on the object (e.g., the indicia embodied by the object) based at least in part on attempting to retrieve data encoded in the indicia on the captured image. For example, in some embodiments, decoding the indicia comprises retrieving data encoded in the indicia on the captured image. In an example embodiment, the controller may run an algorithm (e.g., a decode algorithm) on the captured image to attempt to decode the indicia.

At step/operation 410, the indicia scanner includes means, such as the control system 110, the object detection assembly 104, and/or the like for determining whether the indicia has been decoded. In some embodiments, determining if the indicia has been decoded comprises determining whether data encoded in the captured image has been retrieved. For example, in some embodiments, in response to determining that an object is detected/present within the region of interest, the control system may continue the scanning operation and may determine if the indicia was decoded (e.g., successfully decoded).

At step operation 410a, the method returns to step/operation 408 if it is determined that the indicia has not been decoded. In some embodiments, the control system maintains a control loop between step/operation 408 and 410a until the indicia is decoded, until a determined number of decoding attempts had been reached, or until a time limit had been reached.

At step/operation 410b, the indicia scanner stops the scanning process if it is determined that the indicia has been decoded. In some embodiments, responsive to determining that the indicia is decoded the information/data may be transmitted (e.g., via input/output unit) to a host system. In an example embodiment decoding the indicia comprises retrieving data encoded in the captured image to retrieve data encoded in the indicia.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims.

## Claims

1. A computer-implemented method comprising:
detecting, by a controller (302), an object within a field of view of an object detection assembly (104) of an indicia scanner (100);
starting, by the controller (302), a scanning operation responsive to the detected object, wherein starting the scanning operation comprises energizing an illumination source of the indicia scanner (100);
determining, by the controller (302), whether the object is within a region of interest within the field of view of an image capturing assembly (108) of the indicia scanner (100) wherein the region of interest is determined based on one of: distance between the detected object and the indicia scanner (100), user input and current operating mode of the indicia scanner (100);
continuing the scanning operation responsive to determining that the object is within the region of interest; and
stopping, by the controller (302), the scanning operation upon decoding of an indicia embodied by the object, wherein stopping the scanning operation comprises de-energizing the illumination source and,
stopping, by the controller, the scanning operation in response to determining that an object is not within the region of interest, wherein stopping the scanning operation includes de-energizing the illumination source.

2. The computer-implemented method of claim 1, wherein decoding of the indicia comprises retrieving data encoded in the indicia on a captured image of the object.

3. The computer-implemented method of claim 1, wherein continuing the scanning operation comprises capturing, by the image capturing assembly (108), an image of the region of interest within the field of view.

4. The computer-implemented method of claim 3, wherein continuing the scanning operation further comprises attempting to decode the indicia.

5. The computer-implemented method of claim 1, further comprising enabling, by the controller (302), the object detection assembly (104).

6. An apparatus comprising:
an object detection assembly (104) of an indicia scanner (100) configured to detect presence of an object within a field of view of the indicia scanner (100);
a controller (302) communicatively coupled to the object detection assembly (308), the apparatus being **characterized in that** the controller (302) is configured to:
start a scanning operation responsive to the detected object, wherein starting the scanning operation comprises energizing an illumination source of the indicia scanner (100);
determine whether the object is within a region of interest within the field of view of an image capturing assembly (108) of the indicia scanner (100) wherein the region of interest is determined based on one of: distance between the detected object and the indicia scanner (100), user input and current operating mode of the indicia scanner (100);
continue the scanning operation responsive to determining that the object is within the region of interest; and
stop the scanning operation upon decoding of an indicia embodied by the object, wherein stopping the scanning operation comprises de-energizing the illumination source and
stop the scanning operation in response to determining that an object is not within the region of interest, wherein stopping the scanning operation includes de-energizing the illumination source.

7. The apparatus of claim 6, wherein decoding of the indicia comprises retrieving data encoded in the indicia on a captured image of the object.

8. The apparatus of claim 6, wherein continuing the scanning operation comprises capturing, by the image capturing assembly (108), an image of the region of interest within the field of view.

## Patentansprüche

1. Computerimplementiertes Verfahren, umfassend:
Detektieren, durch eine Steuerung (302), eines Objekts innerhalb eines Sichtfelds einer Objektdetektionsanordnung (104) eines Kennzeichenscanners (100);
Starten, durch die Steuerung (302), eines Scanvorgangs als Antwort auf das detektierte Objekt, wobei das Starten des Scanvorgangs das Versorgen einer Beleuchtungsquelle des Kennzeichenscanners (100) mit Strom umfasst;
Bestimmen, durch die Steuerung (302), ob das Objekt innerhalb einer Region von Interesse innerhalb des Sichtfelds einer Bilderfassungsanordnung (108) des Kennzeichenscanners (100) liegt, wobei die Region von Interesse bestimmt wird auf Basis von einem aus Folgendem: einem Abstand zwischen dem detektierten Objekt und dem Kennzeichenscanner (100), einer Benutzereingabe und einem aktuellen Betriebsmodus des Kennzeichenscanners (100);
Fortsetzen des Scanvorgangs als Antwort auf das Bestimmen, dass das Objekt innerhalb der Region von Interesse liegt; und
Stoppen, durch die Steuerung (302), des Scanvorgangs bei Dekodieren eines durch das Objekt verkörperten Kennzeichens, wobei das Stoppen des Scanvorgangs das Abschalten des Stroms der Beleuchtungsquelle umfasst, und
Stoppen, durch die Steuerung, des Scanvorgangs als Antwort auf das Bestimmen, dass ein Objekt nicht innerhalb der Region von Interesse liegt, wobei das Stoppen des Scanvorgangs das Abschalten des Stroms der Energiequelle beinhaltet.

2. Computerimplementiertes Verfahren nach Anspruch 1, wobei das Dekodieren des Kennzeichens das Abrufen von Daten umfasst, die in dem Kennzeichen auf einem erfassten Bild des Objekts kodiert sind.

3. Computerimplementiertes Verfahren nach Anspruch 1, wobei das Fortsetzen des Scanvorgangs das Erfassen, durch die Bilderfassungsanordnung (108), eines Bildes der Region von Interesse innerhalb des Sichtfelds umfasst.

4. Computerimplementiertes Verfahren nach Anspruch 3, wobei das Fortsetzen des Scanvorgangs ferner das Versuchen umfasst, das Kennzeichen zu dekodieren.

5. Computerimplementiertes Verfahren nach Anspruch 1, ferner umfassend das Aktivieren der Objektdetektionsanordnung (104) durch die Steuerung (302).

6. Einrichtung, umfassend:
eine Objektdetektionsanordnung (104) eines Kennzeichenscanners (100), die dazu konfiguriert ist, eine Anwesenheit eines Objekts innerhalb eines Sichtfelds des Kennzeichenscanners (100) zu detektieren;
eine Steuerung (302), die kommunizierend mit der Objektdetektionsanordnung (308) gekoppelt ist, wobei die Einrichtung **dadurch gekennzeichnet ist, dass** die Steuerung (302) dazu konfiguriert ist:
einen Scanvorgang als Antwort auf das detektierte Objekt zu starten, wobei das Starten des Scanvorgangs das Versorgen einer Beleuchtungsquelle des Kennzeichenscanners (100) mit Strom umfasst;
zu bestimmen, ob das Objekt innerhalb einer Region von Interesse innerhalb des Sichtfelds einer Bilderfassungsanordnung (108) des Kennzeichenscanners (100) liegt, wobei die Region von Interesse bestimmt wird auf Basis von einem aus Folgendem: einem Abstand zwischen dem detektierten Objekt und dem Kennzeichenscanner (100), einer Benutzereingabe und einem aktuellen Betriebsmodus des Kennzeichenscanners (100);
den Scanvorgang als Antwort auf das Bestimmen, dass das Objekt innerhalb der Region von Interesse liegt, fortzusetzen; und
den Scanvorgang bei Dekodieren eines von dem Objekt verkörperten Kennzeichens zu stoppen, wobei das Stoppen des Scanvorgangs das Abschalten des Stroms der Beleuchtungsquelle umfasst, und
den Scanvorgang als Antwort auf das Bestimmen, dass ein Objekt nicht innerhalb der Region von Interesse liegt, zu stoppen, wobei das Stoppen des Scanvorgangs das Abschalten des Stroms der Energiequelle beinhaltet.

7. Einrichtung nach Anspruch 6, wobei das Dekodieren des Kennzeichens das Abrufen von Daten umfasst, die in dem Kennzeichen auf einem erfassten Bild des Objekts kodiert sind.

8. Einrichtung nach Anspruch 6, wobei das Fortsetzen des Scanvorgangs das Erfassen, durch die Bilderfassungsanordnung (108), eines Bildes der Region von Interesse innerhalb des Sichtfelds umfasst.

## Revendications

1. Procédé mis en œuvre par ordinateur comprenant :
la détection, par un contrôleur (302), d'un objet dans un champ de vision d'un ensemble de détection d'objets (104) d'un scanner d'indices (100) ;
le démarrage, par le contrôleur (302), d'une opération de balayage en réponse à l'objet détecté, dans lequel le démarrage de l'opération de balayage comprend la mise sous tension d'une source d'éclairage du scanner d'indices (100) ;
la détermination, par le contrôleur (302), du fait que l'objet se trouve ou pas dans une région d'intérêt dans le champ de vision d'un ensemble de capture d'image (108) du scanner d'indices (100) dans lequel la région d'intérêt est déterminée sur la base de l'une parmi : une distance entre l'objet détecté et le scanner d'indices (100), une entrée utilisateur et un mode de fonctionnement actuel du scanner d'indices (100) ;
la poursuite de l'opération de balayage en réponse à la détermination du fait que l'objet se trouve dans la région d'intérêt ; et
l'arrêt, par le contrôleur (302), de l'opération de balayage lors du décodage d'un indice incorporé par l'objet, dans lequel l'arrêt de l'opération de balayage comprend la mise hors tension de la source d'éclairage et
l'arrêt, par le contrôleur, de l'opération de balayage en réponse à la détermination qu'un objet ne se trouve pas dans la région d'intérêt, dans lequel l'arrêt de l'opération de balayage inclut la mise hors tension de la source d'éclairage.

2. Procédé mis en œuvre par ordinateur selon la revendication 1, dans lequel le décodage des indices comprend la récupération de données encodées dans les indices sur une image capturée de l'objet.

3. Procédé mis en œuvre par ordinateur selon la revendication 1, dans lequel la poursuite de l'opération de balayage comprend la capture, par l'ensemble de capture d'image (108), d'une image de la région d'intérêt dans le champ de vision.

4. Procédé mis en œuvre par ordinateur selon la revendication 3, dans lequel la poursuite de l'opération de balayage comprend en outre la tentative de décodage des indices.

5. Procédé mis en œuvre par ordinateur selon la revendication 1, comprenant en outre l'activation, par le contrôleur (302), de l'ensemble de détection d'objets (104).

6. Appareil comprenant :
un ensemble de détection d'objets (104) d'un scanner d'indices (100) configuré pour détecter la présence d'un objet dans un champ de vision du scanner d'indices (100) ;
un contrôleur (302) couplé de manière communicative à l'ensemble de détection d'objets (308), l'appareil étant **caractérisé en ce que** le contrôleur (302) est configuré pour :
démarrer une opération de balayage en réponse à l'objet détecté, dans lequel le démarrage de l'opération de balayage comprend la mise sous tension d'une source d'éclairage du scanner d'indices (100) ;
déterminer si l'objet se trouve dans une région d'intérêt dans le champ de vision d'un ensemble de capture d'image (108) du scanner d'indices (100) dans lequel la région d'intérêt est déterminée sur la base de l'un parmi : une distance entre l'objet détecté et le scanner d'indices (100), une entrée utilisateur et un mode de fonctionnement actuel du scanner d'indices (100) ;
poursuivre l'opération de balayage en réponse à la détermination que l'objet se trouve dans la région d'intérêt ; et
arrêter l'opération de balayage lors du décodage d'un indice incorporé par l'objet, dans lequel l'arrêt de l'opération de balayage comprend la mise hors tension de la source d'éclairage et
arrêter l'opération de balayage en réponse à la détermination que l'objet ne se trouve pas dans la région d'intérêt, dans lequel l'arrêt de l'opération de balayage inclut la mise hors tension de la source d'éclairage.

7. Appareil selon la revendication 6, dans lequel le décodage des indices comprend la récupération des données encodées dans les indices sur une image capturée de l'objet.

8. Appareil selon la revendication 6, dans lequel la poursuite de l'opération de balayage comprend la capture, par l'ensemble de capture d'image (108), d'une image de la région d'intérêt dans le champ de vision.
